## Europäisches Patentamt
## European Patent Office
## Office européen des brevets

(11) Veröffentlichungsnummer: **0 060 910**
**B1**

(12) **EUROPÄISCHE PATENTSCHRIFT**

(45) Veröffentlichungstag der Patentschrift:
14.05.86

(51) Int. Cl.⁴: **F 16 K · 1/44, F 16 K 11/10**

(21) Anmeldenummer: **81102190.6**

(22) Anmeldetag: **24.03.81**

(54) **Doppelsitzventil mit Leckkontrolle.**

(43) Veröffentlichungstag der Anmeldung:
**29.09.82 Patentblatt 82/39**

(45) Bekanntmachung des Hinweises auf die Patenterteilung:
**14.05.86 Patentblatt 86/20**

(84) Benannte Vertragsstaaten:
**DE FR GB IT NL SE**

(56) Entgegenhaltungen:
**DE - A - 2 455 417**
**DE - A - 2 643 273**
**DE - B - 2 532 838**
**DE - B - 2 632 587**

(73) Patentinhaber: **Holstein & Kappert GmbH,
Juchostrasse 20, D-4600 Dortmund 1 (DE)**

(72) Erfinder: **Bräkelmann, Wolfgang Masch.-Bau-Ing. grad.,
Twiete 7, D-4750 Unna-Uelzen (DE)**
Erfinder: **Smusch, Günther, Ludgeristrasse 6,
D-4712 Werne (DE)**

**Beschreibung**

Die Erfindung bezieht sich auf ein Doppelsitzventil mit Leckkontrolle und zwei unabhängig voneinander bewegbaren Ventiltellern gemäss dem Oberbegriff des Anspruchs 1 und bekannt aus der DE-A-2 643 273.

Mit der zunehmenden Automatisierung in der Getränkeindustrie wurde auch die Forderung nach einer automatischen Reinigung der Produktfliesswege gestellt. In diesem Zusammenhang sind programmgesteuerte chemische Reinigungsverfahren bekannt, deren Reinigungsablauf ferngesteuert eingeleitet werden kann. Hierzu werden Ventile eingesetzt, die sich für die anfallenden und genau festliegenden Betriebsabläufe in Funktion setzen lassen. Bei der Verwendung derartiger Ventile, beispielsweise in Tankbatterien, müssen die einzelnen Betriebsabläufe wie Füllen, Entleeren, Reinigen und Desinfizieren, auf einfache Weise durchführbar sein. Aufgrund der strengen Sicherheitsanforderungen ist dabei eine einwandfreie Trennung von Produkt und Reinigungsflüssigkeit notwendig. Aus diesem Grunde werden insbesondere in der Getränkeindustrie Ventile mit zwei Ventiltellern eingesetzt. Die gegeneinander bewegbaren Ventilteller bilden einen Hohlraum, der mit einer Leckflüssigkeitsleitung in Verbindung steht, welche mit ihrem von dem Ventilsitz abweisenden Ende ins Freie führt. Auf diese Weise können Undichtigkeiten des Ventils infolge der nach aussen austretenden Leckflüssigkeit rasch erkannt und behoben werden, bevor weiterer Schaden eintritt. Ein derartiges Ventil ist beispielsweise aus der DE-A-2 643 273 bekannt, wobei der grössere Ventilteller unten und der kleinere Ventilteller oben angeordnet ist. Die bekannte Ausbildung hat insbesondere bei tiefliegenden Tankarmaturen bzw. Ventilbatterien den Nachteil, dass eine relativ grosse Abstandshöhe vom Boden vorgesehen sein muss, damit ein entsprechender Ausbau dieser Einheiten nach unten erfolgen kann. Darüberhinaus ist bei diesem bekannten Ventil die Zuleitungsöffnung für Reinigungsflüssigkeit auf der Ablauffläche innerhalb des nach aussen geführten Leckflüssigkeitshohlraumes angeordnet. Dies hat den Nachteil, dass bei auftretenden Leckageverlusten diese in die Reinigungsleitung gelangen und entsprechend verkrusten können, so dass innerhalb kurzer Zeit mit einer Störung innerhalb der Zuleitung für Reinigungsflüssigkeit gerechnet werden muss. Darüberhinaus können beispielsweise aus diesem Grund auftretende Verkrustungen in Richtung der Spülflüssigkeitswirkung nach aussen getragen und auf diese Weise zwischen die Spalte der Ventilsitzdichtungen gelangen, was insbesondere bei empfindlichen Produkten, wie sie in der Nahrungsmittelindustrie verwandt werden, erhebliche Schäden durch Infektionen oder dgl. verursachen kann.

Der Erfindung liegt deshalb die Aufgabe zugrunde, insgesamt ein Doppelsitzventil der eingangs genannten Art derart auszubilden, dass einerseits ein ungehinderter Ausbau aller wichtigen Teile von oben und andererseits ein Öffnen der Doppelsitzventilteller nach unten, also entgegengesetzt zur Ausbaurichtung erfolgen kann, wobei durch die konstruktive Ausbildung der untere grössere Ventilteller die Funktion eines Rückschlagventils übernimmt und wobei die nach aussen weisende Leckflüssigkeitsleitung nicht in das Ventilgehäuse bewegt wird. Auch soll der Leckagehohlraum spaltfrei ausgebildet sein, damit eine einwandfreie Reinigung und insbesondere keine Beeinflussung durch die Leckageflüssigkeit in diesem Bereich stattfinden kann. Gleichzeitig soll auch eine Reinigung des die Leckageflüssigkeit ableitenden Kanals sichergestellt sein.

Diese Aufgabe wird bei einem Doppelsitzventil der eingangs genannten Art gelöst durch die Erfindung, wie sie in dem Anspruch 1 gekennzeichnet ist.

Dabei hat es sich als zweckmässig erwiesen, dass zwischen Gehäuse und Sitzring mindestens zwei auf Abstand zueinander angeordnete Dichtungen vorgesehen sind, zwischen denen sich eine Ringnut mit Öffnungen ins Freie befindet.

Der besondere Vorteil der erfindungsgemässen Ventilausbildung besteht darin, dass bei der vorausgesetzten Einbau- und Demontagemöglichkeit von oben der grössere Ventilteller unterhalb des kleineren Ventiltellers angeordnet ist und die Öffnungsbewegung beider Ventilteller nach unten erfolgen kann. Hierdurch werden einerseits Druckschläge in den Leitungen durch die Ausbildung des grösseren Ventiltellers als Rückschlagventil schadlos abgefangen. Darüberhinaus wird der ausserhalb des Ventilgehäuses befindliche Teil der Leckflüssigkeitsleitung bzw. des Ventilschaftes des grösseren Ventiltellers nicht in das Innere des Ventilgehäuses bewegt, so dass Infektionen, die aufgrund der Umgebungsbeeinflussung derartiger Ventilblöcke erfolgen, nicht auftreten können. Schliesslich ist es von besonderer Wichtigkeit, dass mit der vorgeschlagenen Ausbildung der eigentliche Leckagehohlraum völlig spaltfrei ausgebildet ist und eine saubere Oberfläche darstellt. Zudem kann die gesamte Öffnung und der gesamte Ablaufbereich der Leckflüssigkeitsleitung einwandfrei gereinigt werden, ohne dass irgendwelche Rückstände in den Bereich der gefährdeten Stellen gelangen können.

Weitere Merkmale der Erfindung ergeben sich aus den Unteransprüchen und der nachfolgenden Beschreibung.

Die innere Verstellstange des grösseren Ventiltellers weist unterhalb beider Ventilsitze einen Hubsicherungsanschlag auf, wodurch der obere nach aussen ragende Anschluss- und Führungsbereich äusserst kurz gehalten werden kann.

Es kann im übrigen mit dem herausragenden Ende der Leckflüssigkeitsleitung eine Umlenkkammer korrespondieren, die eine Umlenkung der Reinigungsflüssigkeitsleitung gegen den ins Freie ragenden äusseren Mantelbereich der Leckflüssigkeitsleitung bewirkt. Diese erfindungsgemäss gewählte Ausbildung hat den Vorteil, dass die Reinigungsflüssigkeit, bevor sie endgültig ins Freie oder in eine Sammelrinne tritt, nochmals nach Austritt aus dem eigentlichen Leckagerohr umgelenkt und an den äusseren Mantelflächen der Leckflüssigkeitsleitung vorbeigeführt wird. Erst dann gelangt sie zweckmässigerweise unmittelbar unterhalb des Ventilgehäuses ins Freie.

Die Umlenkkammer kann an ihrem unteren Ende zusätzliche Leerlauföffnungen aufweisen. Diese Öffnungen bewirken eine Zwangsentleerung der Umlenkkammer. Die Öffnungen können so gewählt sein, dass sie evtl. auftretende Leckageflüssigkeit sicher ableiten. Sobald jedoch Reinigungsflüssigkeit zur Reinigung des Hohlraumes zwischen beiden Ventiltellern eingeführt wird, kann diese nicht allein aufgrund der grösseren Durchsatzmenge durch die Leerlauföffnungen austreten, so dass eine automatische Umlenkung mindestens eines Teilstromes der Reinigungsflüssigkeit entlang der äusseren Mantelfläche des Leckageablaufrohres bewirkt wird. Die im grösseren Umfang austretende Reinigungsflüssigkeit kann durch entsprechend grösser dimensionierter Bohrungen austreten. Die Abstimmung der Bohrungen zueinander ist so gewählt, dass mit Sicherheit ein Druckaufbau innerhalb des Leckagerohres bei evtl. auftretender Leckage vermieden wird.

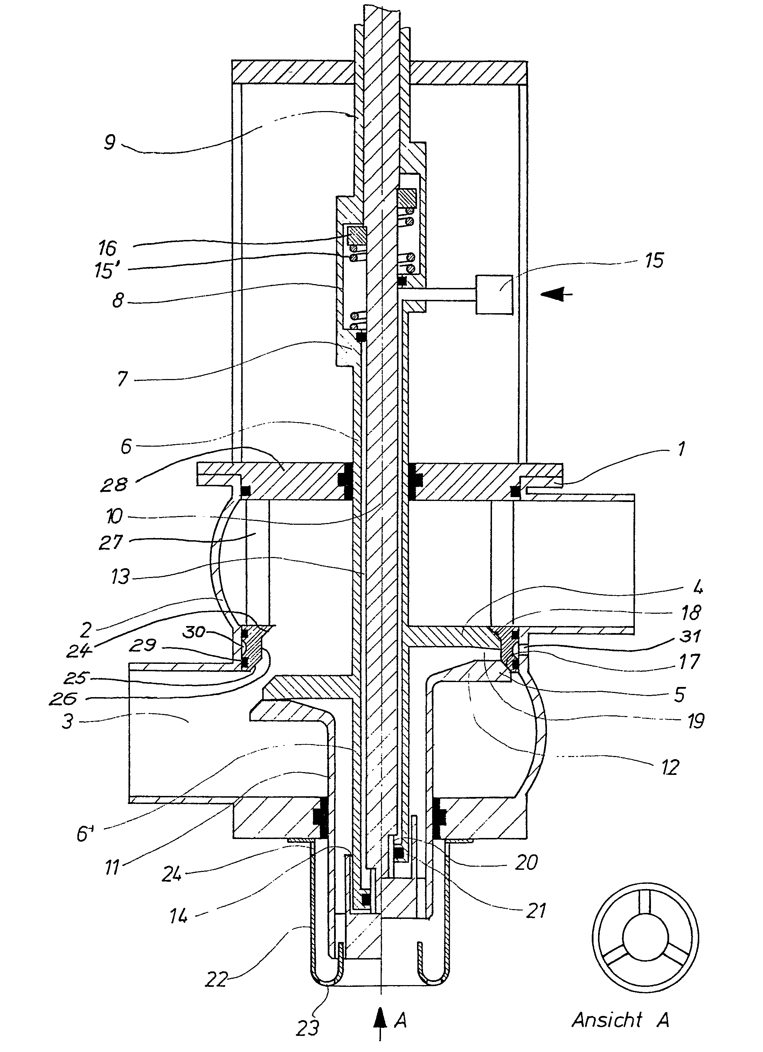

Im nachfolgenden wird die Erfindung anhand eines in der Zeichnung dargestellten Ausführungsbeispiels näher erläutert.

Gemäss dem in der Zeichnung dargestellten Ausführungsbeispiel besteht das Doppelsitzventil aus einem Doppelgehäuse 1 mit ballig ausgebildeten Gehäusehälften 2, 3. Das Gehäuse ist als Mehrwegeverteiler ausgebildet und weist verschiedene Anschlüsse für ein Leitungssystem auf. Innerhalb des Doppelgehäuses 1 sind zwei voneinander unabhängig bewegbare Ventilkörper 4, 5 geführt. Der in Zeichnungsebene bzw. Einbaulage obere Ventilkörper 4 ist mit einer Hohlverstellstange 6 verbunden, die nach oben aus dem Doppelgehäuse 1 herausgeführt ist und eine Verdickung 7 aufweist. Mit dieser Verdickung 7 ist ein Rohr 8 verbunden, welches am oberen Ende lösbar mit der eigentlichen Kolbenstange 9 einer nicht weiter dargestellten Verstelleinrichtung verbunden ist. Innerhalb der Hohlverstellstange 6 ist eine Verstellstange 10 gelagert, die ihrerseits aus dem Gehäuse 1 herausgeführt ist und im unteren Bereich mit dem Leckageablaufrohr bzw. der Leckflüssigkeitsleitung 11 verbunden ist. Die Leckflüssigkeitsleitung 11 ist wiederum Bestandteil des in Zeichnungsebene unteren Ventiltellers 12, welcher grösser als der obere Ventilteller des Ventilkörpers 4 ausgebildet ist.

Die Hohlverstellstange 6 und die Verstellstange 10 bilden einen Ringspalt 13, der von der Verdickung 7 bis zum unteren Bereich der Verstellstange 10 verläuft. Diesem Ringspalt 13 schliesst sich ein die Reinigungsflüssigkeit nach oben umlenkender Austrittskanal 14 an. Am oberen Ende des Ringspaltes 13 in Höhe der Verdickung 7 befindet sich der entsprechende Anschluss 15 für die Reinigungsflüssigkeit. Innerhalb des sich daran anschliessenden Rohres 8 befindet sich eine Druckfeder 15', die sich einerseits auf der Verdickung 7 und andererseits auf einem Steg 16 der inneren Verstellstange 10 anlegt. Aufgabe der Druckfeder 15' ist es, den unteren grösseren Ventilteller 12 gegen den zugeordneten Ventilsitz 17 bzw. bei' Abheben des oberen Ventilkörpers 4 von seinem Sitz 18 gegen diesen anzupressen.

Sobald die Kolbenstange 9 durch Beaufschlagung des zugeordneten Verstellkolbens nach unten bewegt wird, hebt sich der Ventilkörper 4 von seinem Sitz ab und legt sich gegen den unter Federspannung stehenden unteren Ventilkörper 5, wodurch ein Hohlraum 19 zwischen beiden Ventiltellern geschaffen wird. Dieser Hohlraum ist mit der nach unten aus dem Ventilgehäuse herausgeführten Leckflüssigkeitsleitung 11 verbunden. Bei Reinigung dieses Bereiches wird die Reinigungsflüssigkeit durch den Ringspalt 13 und den zugeordneten Austrittskanal 14 entlang der Wandung 6' der verlängerten Hohlverstellstange geführt und erreicht den Hohlraum 19, aus dem sie entlang der gegenüberliegenden Wandung der Leckflüssigkeitsleitung 11 abfliesst. Bei geschlossenem Ventil bzw. bei Anlage beider Ventilkörper 4, 5 an ihren Sitz ist der dann gebildete grössere Hohlraum ebenfalls mit Reinigungsflüssigkeit beaufschlagt.

Im Bereich des Austrittskanals 14 befindet sich ein Absatz 20 auf der Verstellstange 10, mit dem ein Innenring 21 der Hohlverstellstange 6 korrespondiert. Aufgabe dieser Ausbildung ist es, ein Hängenbleiben des Ventilkörpers 5 in der Öffnungsstellung zu verhindern. Sobald beide Ventilkörper 4, 5 aus der Öffnungsstellung in die Schliessstellung bewegt werden, wird der untere Ventilkörper 5 durch Einflussnahme der Druckfeder 15' mitbewegt. Sollte jedoch aus irgendwelchen Gründen ein Verklemmen des Ventilkörpers 5 vorliegen, so legt sich der Innenring 21 gegen den Absatz 20 und löst damit den Ventilkörper 5 aus seiner Verklemmung, sodass dieser wieder unter Einwirkung der Druckfeder 15' in seine ordnungsgemässe Position bewegt wird.

Durch die Verlagerung des grösseren Ventiltellers unterhalb des kleineren Ventiltellers können Druckstösse, die sich zum Gehäuse 3 fortpflanzen, ohne Schaden abgefangen werden, d.h., ein Öffnen des Ventils und ein dadurch gegebenes Vermischen der gegebenenfalls unterschiedlichen Flüssigkeiten in den beiden Gehäusehälften 2, 3 ist ausgeschlossen.

Mit dem herausragenden Ende der Leckflüssigkeitsleitung 11 korrespondiert eine Umlenkkammer 22, die eine Umlenkung der Reinigungsflüssigkeit gegen den ins Freie ragenden äusseren Mantelbereich der Leckflüssigkeitsleitung 11 bewirkt. Die Umlenkkammer 22 weist an ihrem unteren Ende zusätzliche Leerlauföffnungen 23 auf. Die insgesamt im Bereich der Umlenkkammer 22 vorgesehenen Öffnungen 23, 24 sind in ihrem freien Durchtrittsquerschnitt derart dimensioniert, dass deren Querschnittssumme grösser als der Austrittsquerschnitt der Leckflüssigkeitsleitung ist, wodurch ein Rückstau sowohl von Reinigungsflüssigkeit als auch von Leckageflüssigkeit vermieden wird. Darüberhinaus ist durch die Einbringung der Leerlauföffnungen 23 sichergestellt, dass dieser Umlenkkammerbereich 22 ständig frei laufen kann.

Die Ventilsitzflächen 24, 25 des Gehäuses 1 bestehen aus einem in diesem lösbar gelagerten Sitzring 26, welcher über Stützstangen 27 mit dem oberen Flansch 28 der Gehäusehälfte 2 verbunden ist und mit der Innenventileinheit aus dem Ventilgehäuse 1 entnommen werden kann. Zwischen dem Gehäuse 1 und dem Sitzring 26 sind beispielsweise zwei auf Abstand zueinander angeordnete Ringdichtungen 29 vorgesehen, zwischen denen sich eine Ringnut 30 befindet, die ihrerseits Öffnungen 31 zur Ableitung von Leckflüssigkeit ins Freie aufweist.

## Patentansprüche

1. Doppelsitzventil mit Leckkontrolle und zwei unabhängig voneinander bewegbaren Ventiltellern (4, 5), deren einer (4) beim Öffnungsvorgang nach einer bestimmbaren Wegstrecke an den zweiten (5) anlegbar ist und mit diesem einen Hohlraum (19) bildet, von welchem eine Leckflüssigkeitsleitung (11) ins Freie führt, wobei das Ventil senkrecht eingebaut ist und eine Reinigungsflüssigkeitszuleitung (15) aufweist und wobei in Einbaulage der grössere Ventilteller (5) unterhalb des kleineren Ventiltellers (4) angeordnet ist und durch eine Hohlverstellstange (6) des kleineren Ventiltellers (4) geführt ist und beide Ventilteller (4, 5) von oben nach unten in eine Öffnungsstellung verbringbar sind, dadurch gekennzeichnet, dass die Ventilsitzflächen (24, 25) auf einem in dem Gehäuse (1) lösbar gelagerten Sitzring (26) angebracht sind, welcher über Stützstangen (27) mit dem in Einbaulage oberen Flansch (28) des Gehäuses verbunden ist, dass der grössere untere Ventilteller (5) mit einer inneren Verstellstange (10) an deren unterem Ende verbunden ist, dass zwischen innerer Verstellstange (10) und äusserer Hohlverstellstange (6) ein Ringspalt (13) bis zur unteren Verbindung des unteren Ventiltellers (5) vorgesehen ist und dass in diesem unteren Bereich des Ringspaltes (13) ein die Reinigungsflüssigkeit nach oben umlenkender Austrittskanal (14) vorgesehen ist.

2. Doppelsitzventil nach Anspruch 1, dadurch gekennzeichnet, dass zwischen Gehäuse (1) und Sitzring (26) mindestens zwei auf Abstand zueinander angeordnete Ringdichtungen (29) vorgesehen sind, zwischen denen sich eine Ringnut (30) mit Öffnungen (31) ins Freie befindet.

3. Doppelsitzventil nach Anspruch 1, dadurch gekennzeichnet, dass die innere Verstellstange (10) des grösseren Ventiltellers (5) unterhalb beider Ventilsitze einen Hubsicherungsanschlag (20, 21) aufweist.

4. Doppelsitzventil nach den vorhergehenden Ansprüchen 1 bis 3, dadurch gekennzeichnet, dass mit dem herausragenden Ende der Leckflüssigkeitsleitung (11) eine Umlenkkammer (22) korrespondiert, die eine Umlenkung der Reinigungsflüssigkeit gegen den ins Freie ragenden äusseren Mantelbereich der Leckflüssigkeitsleitung (11) bewirkt.

5. Doppelsitzventil nach Anspruch 4, dadurch gekennzeichnet, dass die Umlenkkammer (22) an ihrem unteren Ende zusätzlich Leerlauföffnungen (23) aufweist.

## Claims

1. A double seat valve with a leak control and two independently movable valve heads (4, 5) one of which (4) can come into contact with the other (5) in the process of opening after it has travelled a specified distance and therebetween form a hollow space (19) from which a leakage flow conduit (11) leads to the atmosphere, in which the valve is of vertical construction and has an inlet for cleaning fluid (15) and in which the larger valve head (5) is mounted beneath the smaller valve head (4) and is guided by a hollow adjustment rod (6) of the smaller valve head (4) and both valve heads (4, 5) can be moved downwards into an open position, characterised in that the valve seat surfaces (24, 25) are fitted on a seat ring (26) loosely fitted in the housing (1) which ring is linked via supporting rods (27) with the upper flange (28) of the housing in the fitted position, in that the larger lower valve head (5) is linked to the lower end thereof with an internal adjusting rod (10), in that an annular space (13) down to the lower connection of the lower valve head (5) is provided between the inner adjustment rod (16) and the outer hollow adjustment rod (6) and in that an outlet channel (14) which diverts the cleaning fluid upwardly is provided in this lower region of the annular space (13).

2. A double seat valve according to claim 1, characterised in that at least two annular seals (29) between which there lies an annular groove (30) with openings (31) into the open are provided at a distance from each other between housing (1) and seating ring (26).

3. A double seat valve according to claim 1, characterised in that the inner adjustment rod (10) of the larger valve head (5) has a stroke safety fitting (20, 21) below the two valve seats.

4. A double seat valve according to the foregoing claims 1 to 3, characterised in that a diverting chamber (22) corresponds to the projecting end of the leakage flow conduit (11) and diverts the cleaning fluid against the outer shell of the leakage flow conduit (11) which projects into the opening.

5. A double seat valve according to claim 4, characterised in that the diverting chamber (22) has additional drainage openings (23) at its lower end.

## Revendications

1. Soupape à siège double avec contrôle des fuites, comportant deux têtes de soupape (4, 5) déplaçables indépendamment l'une de l'autre dans le sens de leur éloignement, dont l'une (4) vient s'appliquer contre l'autre (5) lors du processus d'ouverture, après avoir parcouru une certaine course, et forme avec cette autre tête de soupape une cavité (19) d'où part un conduit pour fuites de liquide (11) menant vers l'extérieur, la soupape étant disposée verticalement et comportant un conduit d'amenée de liquide de nettoyage (15), et la plus grande tête de soupape (5) se situant au-dessous de la plus petite tête de soupape (4) en position montée et étant guidée par une tige de commande creuse de la plus petite tête de soupape (4), et les deux têtes de soupape (4, 5) étant aptes à être amenées dans une position d'ouverture par un déplacement du haut vers le bas, caractérisée en ce que les surfaces des sièges de soupape (24, 25) sont formées sur une pièce annulaire (26) montée de façon amovible dans le boîtier (1) et reliée par l'intermédiaire d'entretoises (27) à la bride supérieure (28) du boîtier en position montée, en ce que la plus grande tête de soupape (5), inférieure, est liée à une tige de commande intérieure (10) par l'extrémité inférieure de celle-ci, en ce qu'un interstice annulaire (13) est prévu entre la tige de commande intérieure (10) et la tige de commande creuse extérieure (6), jusqu'à la liaison inférieure de cette dernière avec la tête de soupape inférieure (5), et en ce que, dans cette zone inférieure de l'interstice annulaire (13), il est prévu un canal de sortie (14) déviant le liquide de nettoyage vers le haut.

2. Soupape à siège double selon la revendication 1, caractérisée en ce que sont prévues, entre le boîtier (1) et la pièce annulaire (26) formant les sièges, au moins deux organes d'étanchéité annulaires (29) placés à distance l'un de l'autre, entre lesquels se trouve une gorge annulaire (30) avec des ouvertures (31) débouchant vers l'extérieur.

3. Soupape à siège double selon la revendication 1, caractérisée en ce que la tige de commande intérieure (10) de la plus grande tête de soupape (5) comporte, au-dessous des deux sièges de soupape, une butée (20, 21) garantissant le soulèvement de ladite tête.

4. Soupape à siège double selon les revendications précédentes 1 à 3, caractérisée en ce qu'il correspond, à l'extrémité du conduit pour fuite de liquide (11) dépassant à l'extérieur, une chambre déflectrice (22) qui provoque un changement de direction d'écoulement du liquide de nettoyage autour de la région périphérique tournée vers l'extérieur du conduit pour fuites de liquide (11).

5. Soupape à siège double selon la revendication 4, caractérisée en ce que la chambre déflectrice (22) présente, à son extrémité inférieure, des ouvertures auxiliaires (23) de fonctionnement à vide.

0 060 910

Ansicht A